# EUROPÄISCHE PATENTSCHRIFT

(11) **EP 3 850 390 B1**
(45) Veröffentlichungstag und Bekanntmachung des Hinweises auf die Patenterteilung: **27.12.2023**
(21) Anmeldenummer: 20735324.4
(22) Anmeldetag: 26.06.2020
(51) Int. Cl.: G01S 19/35, G01S 19/14, G06F 21/74, G06F 21/60, G01S 5/02

(54) **STEUERGERÄT FÜR EIN KRAFTFAHRZEUG UND KRAFTFAHRZEUG**
CONTROL UNIT FOR A MOTOR VEHICLE AND MOTOR VEHICLE
UNITÉ DE COMMANDE D'UN VÉHICULE AUTOMOBILE ET VÉHICULE AUTOMOBILE

(30) Priorität: 27.06.2019 DE 102019209355
(43) Veröffentlichungstag der Anmeldung: 21.07.2021
(73) Patentinhaber: Audi AG, 85045 Ingolstadt (DE)
(72) Erfinder: MEYER, Jürgen, 85125 Haunstetten (DE)
(74) Vertreter: Lindner Blaumeier Patent- und Rechtsanwälte
(86) Internationale Anmeldenummer: PCT/EP2020/068009
(87) Internationale Veröffentlichungsnummer: WO 2020/260573

(56) Entgegenhaltungen:
- DE-A1-102008 061 710
- DE-A1-102012 213 155
- DE-A1-102017 124 399
- DE-A1-102017 202 347
- US-B2- 10 103 889

## Beschreibung

Die Erfindung betrifft ein Steuergerät für ein Kraftfahrzeug, aufweisend wenigstens eine Leiterplatte mit wenigstens zwei Mikroprozessoren zur Bereitstellung von Funktionen des Steuergeräts, wobei wenigstens eine Sicherheitsfunktion der Funktionen einer gegenüber wenigstens einer anderen Funktion der Funktionen erhöhten Sicherheitsanforderung, insbesondere ASIL-Stufe, unterliegt. Daneben betrifft die Erfindung ein Kraftfahrzeug mit einem solchen Steuergerät.

Mit der Elektronisierung verschiedenster Funktionen in Kraftfahrzeugen nimmt die Zahl an Steuergeräten zu. Steuergeräte in Kraftfahrzeugen umfassen typischerweise eine Leiterplatte, auf der die verschiedenen, für die Ausführung der Funktionen benötigten elektronischen Komponenten, insbesondere umfassend wenigstens einen Mikroprozessor, angeordnet sind. Moderne, neue Funktionalitäten, insbesondere solche, die mit der vollständig automatischen Führung von Kraftfahrzeugen in Zusammenhang stehen, müssen besonders abgesichert sein. An solche Sicherheitsfunktionen werden mithin Sicherheitsanforderungen gestellt, beispielsweise nach einem bestimmten Standard.

Hierzu wurde, was Kraftfahrzeuge angeht, die die ISO 26262 ("Road Vehicles - Functional Safety") eingeführt. Diese Norm gilt für sicherheitsrelevante elektronische Systeme in Kraftfahrzeugen, insbesondere also auch Steuergeräte und definiert unter anderem auch bestimmte Sicherheitsstufen, die sogenannten ASIL-Stufen (Automotive Safety Integrity Level). Diese speziellen Sicherheitsanforderungen beziehen sich zum einen auf die Hardware, zum anderen auch auf die Software.

Sobald eine einzige, in einem Steuergerät durchführende Funktion, die im Folgenden als Sicherheitsfunktion bezeichnet wird, eine Sicherheitsanforderung, insbesondere ein ASIL-Level aufweist, ist das gesamte Steuergerät, unabhängig, ob die weiteren Funktionen des Steuergeräts eine niedrigere oder gar keine Sicherheitsanforderung aufweisen, auf die Sicherheitsanforderung der Sicherheitsfunktion auszulegen. Mit anderen Worten wird das Design der Hardware und der Software des Steuergeräts derzeit durch die höchstmögliche Sicherheitsanforderung unter den durch das Steuergerät durchzuführenden verschiedenen Funktionen bestimmt.

Dies ist insbesondere dann als problematisch zu bewerten, wenn die Sicherheitsfunktion, die mithin die hohe Sicherheitsanforderung hat, nicht zwangsläufig in jedem Kraftfahrzeug, in dem das Steuergerät eingesetzt wird, genutzt wird. Beispielsweise sind bereits Steuergeräte für Kraftfahrzeuge entwickelt worden, die eine bestimmte Sicherheitsfunktion nur in bestimmten Ausbaustufen benötigen, beispielsweise in Fällen, in denen nur 5% der hergestellten Steuergeräte in ihrer Laufzeit die Sicherheitsfunktion überhaupt benötigen. Durch die Entwicklung gemäß der Sicherheitsanforderung der Sicherheitsfunktion wird das Grundprojekt erheblich belastet, welches jedoch möglichst günstig sein sollte. Aus der hohen Sicherheitsanforderung resultieren spezielle Hardwarekomponenten und strikte Vorgaben für die Software.

Wichtige Funktionen in Kraftfahrzeugen, denen Sicherheitsanforderungen zugeordnet werden, die mithin Sicherheitsfunktionen bilden, sind solche, die Positionsdaten liefern. Insbesondere sind hierbei die GNSS-Funktionen (GNSS - globales Navigationssatellitensystem), beispielsweise GPS-Funktionen, zu nennen. Bei der Verortung von solchen GNSS-Funktionen in Steuergeräten wurde vorgeschlagen, die Sicherheitsanforderung erfüllende GNSS-Empfänger (GNSS-Receiver) auf der Leiterplatte zu verbauen, wobei jedoch die die Positionsdaten ermittelnde Software im Mikroprozessor (auch Mikrokontroller, µC) abläuft, welcher die entsprechende Sicherheitsanforderung, beispielsweise ASIL-Stufe, erfüllen muss. Auch die Software muss entsprechend entwickelt werden.

WO 2018/169590 A1 betrifft das Erreichen einer verbesserten ASIL-Klassifizierung durch kooperative Positionsbestimmung. Dabei wird vorgeschlagen, neben einer GNSS-Lokalisierung des Kraftfahrzeugs auch eine Lokalisierung aufgrund von Kommunikationsdaten anderer Fahrzeuge vorzunehmen. Es werden Aufenthaltsregionen bestimmt, wobei eine Zuverlässigkeitsstufe der Positionsgenauigkeit erhöht wird, wenn die Aufenthaltsregionen überlappen.

WO 2017/080556 A1 betrifft ein Verfahren und eine Vorrichtung zum Bewerten einer Position eines Fahrzeugs, insbesondere nach einer ASIL-Sicherheitsstufe. Dort soll eine erste Absolut-Position mittels eines herkömmlichen GNSS-Empfängers bestimmt werden, welche mit einer zweiten Absolut-Position verglichen werden soll, die jedoch in einer abgesicherten Sicherheitseinheit oder einem abgesicherten ASIL-fähigen Chip ermittelt wird und daher stets plausibel ist.

EP 3 454 088 A1 betrifft Systeme und Verfahren zur Bereitstellung eines ASIL-Kennzeichners für eine GNSS-Position. Dort wird vorgeschlagen, Hardware-Plattform-Diagnostiken durchzuführen und einen RAIM-Algorithmus auszuführen, um eine Schutzstufe zu bestimmen. Aus den Ergebnissen soll ein ASIL-"gut"-Kennzeichner oder ein ASIL-"schlecht"-Kennzeichner ermittelt werden.

DE 10 2012 213 155 A1 betrifft eine Vorrichtung mit Sicherheitseinheiten in unterschiedlich geschützten Bereichen, wobei ein stärker geschützter Bereich eine erste Sicherheitseinheit zur Ausführung einer Anzahl von ersten Sicherheitsfunktionen für eine zugeordnete erste Datenverarbeitungseinheit und ein schwächer geschützter Bereich eine zweite Sicherheitseinheit zur Ausführung einer Anzahl von zweiten Sicherheitsfunktionen für eine zugeordnete zweite Datenverarbeitungseinheit aufweist. Die zweiten Sicherheitsfunktionen umfassen zumindest eine freizuschaltende Sicherheitsfunktion, wobei die erste Sicherheitseinheit dazu eingerichtet ist, die zumindest eine freizuschaltende Sicherheitsfunktion der zweiten Sicherheitseinheit mittels eines vorbestimmten Freischaltsignals freizuschalten. Dies soll dazu dienen, den höheren Schutz des stärker geschützten Bereichs für die in dem schwächer geschützten Bereich angeordnete Sicherheitseinheit mitzunutzen. Insbesondere geht es dabei um einen intelligenten Zähler (Smart Meter), wobei die erste Sicherheitseinheit verwendet wird, erfasste Messwerte oder Verbrauchswerte digital zu signieren und die Kommunikation mittels der zweiten Sicherheitseinheit freizuschalten.

US 10 103 889 B2 betrifft die Schaffung einer sicheren Kommunikation zwischen zwei Berechnungssystemen in unterschiedlichen Kraftfahrzeugen, wozu ein kraftfahrzeugexterner Koordinationsserver verwendet wird.

DE 10 2017 124 399 A1 betrifft die Nutzung einer zusätzlichen Hardware-Verschlüsselungs-/Entschlüsselungseinrichtung, die operativ mit einem Speicher verbunden ist, auf dem verschlüsselte Daten und unverschlüsselte Daten vorliegen, welche durch eine Hauptsteuereinheit genutzt werden sollen. Durch die zusätzliche Hardware-Verschlüsselungs-/Entschlüsselungseinrichtung soll eine parallele Datenverarbeitung und Datenverschlüsselung/- entschlüsselung ermöglicht werden.

DE 10 2008 061710 A1 beschreibt eine Sensorvorrichtung mit einem Gehäuse, einer Sicherheitseinrichtung sowie einer sicheren ersten Recheneinrichtung, einer zweiten Recheneinrichtung und mindestens einem Sensorelement. Die Sensorvorrichtung ist dabei ausgebildet, um eine Temperatur in dem Gehäuse zu erfassen, so dass die erste Recheneinrichtung nur dann in Betrieb genommen wird, wenn die erfasste Temperatur in einem vorgegebenen Temperaturbereich liegt. Die in genommene erste Recheneinrichtung dient dann zum Ermitteln und speichern eines Sitzungsschlüssels für die Kommunikation mit einem externen Gerät wie einem Tachographen.

Der Erfindung liegt die Aufgabe zugrunde, ein zur Durchführung einer Sicherheitsfunktion mit einer Sicherheitsanforderung geeignetes Steuergerät bereitzustellen, welches einfacher und kostengünstiger zu entwickeln und zu konstruieren ist.

Die vorliegende Erfindung ist in den unabhängigen Ansprüchen dargelegt, wobei einige optionale Merkmale in den davon abhängigen Ansprüchen aufgeführt sind.

Zur Lösung dieser Aufgabe ist bei einem Steuergerät der eingangs genannten Art erfindungsgemäß vorgesehen, dass auf der Leiterplatte ein Sicherheitsbereich vorgesehen ist, in dem alle für die Durchführung der Sicherheitsfunktion vorgesehenen Komponenten, umfassend wenigstens einen ersten Mikroprozessor, die Sicherheitsanforderung erfüllend realisiert sind, wobei jegliche, wenigstens teilweise die Leiterplatte nutzende Kommunikation des ersten Mikroprozessors in und aus dem Sicherheitsbereich Ende-zu-Ende-verschlüsselt erfolgt, und wobei auf der Leiterplatte wenigstens ein zweiter, die Sicherheitsanforderung nicht erfüllender Mikroprozessor zur Bereitstellung der wenigstens einen anderen Funktion außerhalb des Sicherheitsbereichs angeordnet ist.

Bei der Sicherheitsanforderung handelt es sich dabei insbesondere um eine ASIL-Stufe gemäß ISO 26262, insbesondere ISO 26262:2018. Erfindungsgemäß wird also vorgeschlagen, für die die Sicherheitsanforderung aufweisende Sicherheitsfunktion eine Art eigene "Insel" auf der Leiterplatte zu schaffen, welche in sich die entsprechende Sicherheitsanforderung, insbesondere den ASIL-Level, gewährleistet und entsprechend entwickelt wird. Dabei sind alle Daten, die von der "Insel", also dem Sicherheitsbereich, eingelesen oder ausgegeben werden, bereits E2E-abgesichert, also durch Ende-zu-Ende-Verschlüsselung abgesichert. Hierzu kann insbesondere vorgesehen sein, dass jede aus dem Sicherheitsbereich herausführende Kommunikationsstrecke vorzugsweise ein E2E-Ent- und Verschlüsselungsmittel aufweist, insbesondere an ihrer im Sicherheitsbereich liegenden Schnittstelle und/oder in dem ersten Mikroprozessor. Insbesondere kann mithin eine derartige Schnittstelle Teil des ersten Mikroprozessors sein. Die Bereitstellung eines Sicherheitsbereichs für die Komponenten der Sicherheitsfunktion ermöglicht es, dass der Rest des Steuergeräts nicht gemäß der Sicherheitsanforderung der Sicherheitsfunktion entwickelt werden muss, so dass Kosten im Grundprojekt gespart werden können und nur für eine etwaige Mehrausstattung investiert werden müssen, die entsprechend einer Funktion, hier der Sicherheitsfunktion, zugeordnet werden kann. Insbesondere ist es für Hersteller also möglich, dass Benutzer des Kraftfahrzeugs für die Mehrausstattung zahlen.

Dabei ist es besonders zweckmäßig, wenn die Sicherheitsfunktion eine Positionsdaten für das Kraftfahrzeug bereitstellende GNSS-Funktion, insbesondere eine GPS-Funktion, ist. Dann entsteht als Teil des Steuergerätes auf der Leiterplatte in Form des Sicherheitsbereichs letztlich eine GNSS-Insel, insbesondere eine ASIL-GNSS-Insel, welche letztlich in Form einer Bestückoption vorgesehen sein kann, so dass beispielsweise das Steuergerät zunächst grundsätzlich für die weiteren Funktionen entwickelt werden kann, wobei dann, wenn eine GNSS-Funktion erwünscht ist, die entsprechenden Komponenten optional bestückt werden können, welche gezielt für die GNSS-Funktion und gemäß der Sicherheitsanforderungen entwickelt wurden.

Mit anderen Worten wird eine Bestückoption für die GNSS-Insel auf der Leiterplatte des Steuergeräts geschaffen, wobei sich innerhalb dieser Insel, also des Sicherheitsbereichs, die entsprechenden für die GNSS-Funktion notwendigen Komponenten befinden. Dabei kann konkret vorgesehen sein, dass die Komponenten des Sicherheitsbereichs neben dem ersten Mikroprozessor eine GNSS-Antenne und/oder einen GNSS-Receiver und/oder wenigstens ein Hochfrequenzbauteil, insbesondere ein Filter und/oder einen Bandpass, und/oder eine inertiale Messeinheit (IMU) umfassen. Innerhalb des Sicherheitsbereichs befinden sich also insbesondere die Hochfrequenzkomponenten (HF-Filter, Bandpässe, etc.), der/die GNSS-Receiver, die IMU und der erste Mikroprozessor, der im Fall einer ASIL-Stufe dann auch als ASIL-pC bezeichnet werden kann. Die Komponenten des Sicherheitsbereichs wurden entsprechend gemäß der Sicherheitsanforderung entwickelt, insbesondere nach ISO 26262, und werden auch entsprechend abgenommen. Der Rest des Steuergeräts wird weiterhin nach üblichen Qualitätsmanagement-Anforderungen (QM) entwickelt.

Der erste Mikroprozessor stellt seine Positionsdaten bereits E2E abgesichert, insbesondere an einer seiner Schnittstellen, bereit, beispielsweise einer Ethernet-Schnittstelle. Somit müssen keine weiteren Maßnahmen auf dem Steuergerät beziehungsweise insgesamt im Kraftfahrzeug getroffen werden.

Auch allgemein kann vorgesehen sein, dass der erste Mikroprozessor als insbesondere über Ethernet aus dem Sicherheitsbereich kommunizierende Komponente eine Schnittstelle zur Bereitstellung E2E-verschlüsselter Kommunikationsdaten aufweist. Weist der erste Mikroprozessor auch weitere Schnittstellen auf, sind zweckmäßigerweise auch diese zur E2E-verschlüsselten Kommunikation ausgebildet.

Vorteilhafterweise können der erste und der zweite Mikroprozessor mit einem außerhalb des Sicherheitsbereichs liegenden Switch verbunden sein und/oder es kann eine für die gesamte Leiterplatte inklusive des Sicherheitsbereichs gemeinsame Stromversorgungseinheit auf der Leiterplatte vorgesehen sein. Mithin können als Elektronikkomponenten ein Switch und/oder eine Stromversorgungseinheit zweckmäßig sowohl für den Sicherheitsbereich als auch für den restlichen Bereich außerhalb der "Insel" genutzt werden, insbesondere wenn an derartige Komponenten durch die Sicherheitsanforderung keine besonderen Ansprüche gestellt werden.

Neben dem Steuergerät betrifft die Erfindung auch ein Kraftfahrzeug, aufweisend wenigstens ein Steuergerät gemäß der vorliegenden Erfindung. Sämtliche Ausführungen zum erfindungsgemäßen Steuergerät lassen sich analog auf das erfindungsgemäße Kraftfahrzeug übertragen, mit welchem mithin ebenso die bereits genannten Vorteile erhalten werden können.

Insbesondere sieht eine vorteilhafte Weiterbildung des erfindungsgemäßen Kraftfahrzeugs vor, dass es wenigstens eine Kommunikationsdaten für den Sicherheitsbereich bereitstellende Recheneinrichtung aufweist, die zum E2E-verschlüsseltem Übersenden der Kommunikationsdaten an das Steuergerät ausgebildet ist. In besonders vorteilhafter Weiterbildung der vorliegenden Erfindung, wenn die Sicherheitsfunktion eine Positionsdaten liefernde GNSS-Funktion ist, betreffen die Kommunikationsdaten einen Korrekturservice, um die Positionsgenauigkeit zu erhöhen, beispielsweise ein dGPS und/oder Informationen zu Atmosphärenschwankungen. Diese können von dem entsprechenden Backend, also der Recheneinrichtung, bis in den Sicherheitsbereich, konkret also bis zum ersten Mikroprozessor, E2E-abgesichert, übertragen werden, so dass zweckmäßig eine entsprechende Ausgestaltung gegeben ist, falls die Recheneinrichtung innerhalb des Kraftfahrzeugs vorgesehen ist.

Stammen die Kommunikationsdaten, beispielsweise betreffend Atmosphärenschwankungen, von einem Backend-Server außerhalb des Kraftfahrzeugs, kann vorgesehen sein, dass sie bereits dort entsprechend E2E-verschlüsselt werden. Möglich ist es aber auch, dass die Recheneinrichtung eine Kommunikationseinrichtung des Kraftfahrzeugs ist, die die gegebenenfalls noch anderweitig verschlüsselten oder unverschlüsselten Kommunikationsdaten von einem Backend-Server entgegennimmt. Dann muss selbstverständlich auch die Kommunikationseinrichtung beziehungsweise zumindest die diese Kommunikationsdaten behandelnde Komponente gemäß der Sicherheitsanforderung ausgestaltet sein. Dies gilt entsprechend auch für sonstige Recheneinrichtungen innerhalb des Kraftfahrzeugs, welche Kommunikationsdaten in den Sicherheitsbereich für die Sicherheitsfunktion liefern kann.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines erfindungsgemäßen Steuergeräts, und
- Fig. 2: eine Prinzipskizze eines erfindungsgemäßen Kraftfahrzeugs.

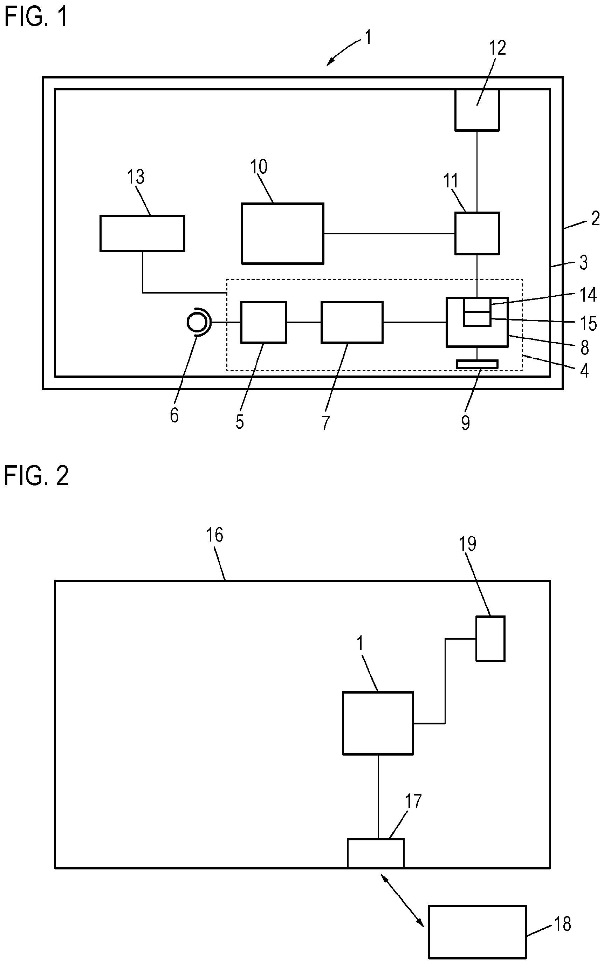

Fig. 1 zeigt ein erfindungsgemäßes Steuergerät 1, welches eine beispielsweise innerhalb eines Gehäuses 2 angeordnete Leiterplatte umfasst. Nachdem das Steuergerät 1 eine Sicherheitsfunktion, hier eine GNSS-Funktion, an die eine Sicherheitsanforderung, hier eine ASIL-Stufe, gestellt ist, ausführen soll, umfasst das Steuergerät 1 einen Sicherheitsbereich 4, der vorliegend auch als ASIL-GNSS-Insel bezeichnet werden kann. Innerhalb dieses Sicherheitsbereichs 4, der bei der Herstellung nur optional bestückt wird, befinden sich alle für die Durchführung der GNSS-Funktion benötigten Komponenten. Diese umfassen vorliegend Hochfrequenzbauteile 5, die an eine GNSS-Antenne 6 gekoppelt sind, wenigstens einen GNSS-Receiver 7, einen ersten Mikroprozessor 8 sowie eine inertiale Messeinheit 9 (IMU). Sämtliche dieser Komponenten 5, 7, 8, 9 sind sowohl was Hardware als auch gegebenenfalls Software betrifft gemäß der Sicherheitsanforderung entwickelt.

Zur Durchführung der weiteren Funktionen des Steuergeräts 1, die die Sicherheitsanforderung für die GNSS-Funktion nicht erfüllen müssen (beziehungsweise niedrigere Sicherheitsanforderungen erfüllen müssen), ist ein zweiter Mikroprozessor 10 auf der Leiterplatte 3 vorgesehen. Dieser ist entsprechend nicht nach der höheren Sicherheitsanforderung der GNSS-Funktion entwickelt worden. Sowohl der erste Mikroprozessor 9 als auch der zweite Mikroprozessor 10 sind über einen Switch 11 mit einer physikalischen Schnittstelle 12 des Steuergeräts 1 verbunden, beispielsweise einer CAN-Bus-Schnittstelle oder dergleichen. Sowohl die Komponenten des Sicherheitsbereichs 4 als auch die übrigen Komponenten auf der Leiterplatte 3 werden durch eine gemeinsame Stromversorgung 13 gespeist.

Sämtliche über eine Schnittstelle 14 des ersten Mikroprozessors 8 ausgehende und eingehende Kommunikation ist E2E-verschlüsselt (Ende-zu-Ende-verschlüsselt). Dies kann insbesondere durch Nutzung eines E2E-Ent- und Verschlüsselungsmittel 15 geschehen, welches auch einen Teil der Schnittstelle 14 bilden kann.

Fig. 2 zeigt eine Prinzipskizze eines erfindungsgemäßen Kraftfahrzeugs 16. Das Kraftfahrzeug 16 weist wenigstens ein Steuergerät 1 auf, das wie bezüglich Fig. 1 erläutert ausgebildet ist. Vorliegend kommuniziert das Steuergerät 1 auch mit einer Kommunikationseinrichtung 17 des Kraftfahrzeugs 16, welche in Kommunikationsverbindung mit wenigstens einer kraftfahrzeugexternen Recheneinrichtung 18 steht, vorliegend einer Backend-Einrichtung, die Kommunikationsdaten zur genaueren Ausführung der GNSS-Funktion liefern, beispielsweise Kommunikationsdaten zu aktuellen Atmosphärenschwankungen und/oder zu einer dGPS-Funktion, welche bereits in der Recheneinrichtung 18 geeignet E2E-verschlüsselt werden, so dass sie von der Kommunikationseinrichtung 17 unmittelbar an das Steuergerät 1 und mittels des Switches 11 an den ersten Mikroprozessor 8 geliefert werden können.

Denkbar ist es auch, eine Recheneinrichtung 19, die solche Kommunikationsdaten für eine Sicherheitsfunktion, insbesondere die GNSS-Funktion , liefert, innerhalb des Kraftfahrzeugs 16 vorzusehen, wobei dann entsprechend auch dort die Sicherheitsanforderung erfüllt sein muss und die E2E-Verschlüsselung der Kommunikationsdaten umgesetzt werden muss. Werden die Kommunikationsdaten von der Recheneinrichtung 18 beispielsweise unverschlüsselt geliefert, kann auch unter Beachtung der Sicherheitsanforderung in der Kommunikationseinrichtung 17 als weitere Recheneinrichtung eine Verschlüsselung erfolgen, so dass die E2E-Absicherung bis zum ersten Mikroprozessor 8 gegeben ist.

## Patentansprüche

1. Steuergerät (1) für ein Kraftfahrzeug (16), aufweisend wenigstens eine Leiterplatte (3) mit wenigstens zwei Mikroprozessoren (8, 10) zur Bereitstellung von Funktionen des Steuergeräts (1), wobei wenigstens eine Sicherheitsfunktion der Funktionen einer gegenüber wenigstens einer anderen Funktion der Funktionen erhöhten Sicherheitsanforderung unterliegt,
wobei auf der Leiterplatte (3) ein Sicherheitsbereich (4) vorgesehen ist, in dem alle für die Durchführung der Sicherheitsfunktion vorgesehenen Komponenten, umfassend wenigstens einen ersten Mikroprozessor (8), die Sicherheitsanforderung erfüllend realisiert sind, wobei jegliche, wenigstens teilweise die Leiterplatte (3) nutzende Kommunikation des ersten Mikroprozessors in und aus dem Sicherheitsbereich (4) Ende-zu-Ende-verschlüsselt erfolgt, und wobei auf der Leiterplatte (3) wenigstens ein zweiter, die Sicherheitsanforderung nicht erfüllender Mikroprozessor (10) zur Bereitstellung der wenigstens einen anderen Funktion außerhalb des Sicherheitsbereichs (4) angeordnet ist.

2. Steuergerät (1) nach Anspruch 1,
wobei die Sicherheitsfunktion eine Positionsdaten für das Kraftfahrzeug (16) bereitstellende GNSS-Funktion ist.

3. Steuergerät (1) nach Anspruch 2,
wobei die Komponenten des Sicherheitsbereichs (4) neben dem ersten Mikroprozessor (8) eine GNSS-Antenne (6) und/oder einen GNSS-Receiver (7) und/oder wenigstens ein Hochfrequenzbauteil (6) und/oder eine inertiale Messeinheit (9) umfassen.

4. Steuergerät (1) nach einem der vorangehenden Ansprüche,
wobei der erste Mikroprozessor (8) als aus dem Sicherheitsbereich (4) kommunizierende Komponente eine Schnittstelle (14) zur Bereitstellung E2E-verschlüsselter Kommunikationsdaten aufweist.

5. Steuergerät (1) nach einem der vorangehenden Ansprüche,
wobei der erste und der zweite Mikroprozessor (8, 10) mit einem außerhalb des Sicherheitsbereichs (4) liegenden Switch (11) verbunden sind und/oder das eine für die gesamte Leiterplatte (3) inklusive dem Sicherheitsbereich (4) gemeinsame Stromversorgungseinheit (13) auf der Leiterplatte (3) vorgesehen ist.

6. Kraftfahrzeug (16), aufweisend wenigstens ein Steuergerät (1) nach einem der vorangehenden Ansprüche.

7. Kraftfahrzeug (16) nach Anspruch 6,
wobei es wenigstens eine Kommunikationsdaten für den Sicherheitsbereich (4) bereitstellende Recheneinrichtung (19) aufweist, die zum E2E-verschlüsseltem Übersenden der Kommunikationsdaten an das Steuergerät (1) ausgebildet ist.

## Claims

1. Control unit (1) for a motor vehicle (16), comprising at least one printed circuit board (3) having at least two microprocessors (8, 10) for providing functions of the control unit (1), wherein at least one safety function among the functions is subject to an increased safety requirement compared with at least one other function among the functions,
wherein there is provision on the printed circuit board (3) for a safety area (4) in which all of the components intended to perform the safety function, comprising at least one first microprocessor (8), are implemented so as to meet the safety requirement, wherein any communication by the first microprocessor that at least partly uses the printed circuit board (3) takes place with end-to-end encryption to and from the safety area (4), and wherein at least one second microprocessor (10), which does not meet the safety requirement, is arranged on the printed circuit board (3) to provide the at least one other function outside the safety area (4).

2. Control unit (1) according to Claim 1,
wherein the safety function is a GNSS function that provides position data for the motor vehicle (16).

3. Control unit (1) according to Claim 2,
wherein the components of the safety area (4) comprise not only the first microprocessor (8) but also a GNSS antenna (6) and/or a GNSS receiver (7) and/or at least one radio-frequency assembly (6) and/or an inertial measurement unit (9).

4. Control unit (1) according to one of the preceding claims,
wherein the first microprocessor (8) comprises an interface (14) for providing E2E-encrypted communication data as a component that communicates from the safety area (4).

5. Control unit (1) according to one of the preceding claims,
wherein the first and the second microprocessor (8, 10) are connected to a switch (11) situated outside the safety area (4) and/or there is provision on the printed circuit board (3) for a power supply unit (13) that is common to the whole printed circuit board (3), including the safety area (4).

6. Motor vehicle (16), comprising at least one control unit (1) according to one of the preceding claims.

7. Motor vehicle (16) according to Claim 6,
wherein it comprises at least one computing device (19) that provides communication data for the safety area (4) and that is designed to send the communication data to the control unit (1) with E2E encryption.

## Revendications

1. Dispositif de commande (1) destiné à un véhicule automobile (16), ledit dispositif de commande comportant au moins une carte de circuit imprimé (3) pourvue d'au moins deux microprocesseurs (8, 10) destinés à assurer des fonctions du dispositif de commande (1), au moins une fonction de sécurité parmi les fonctions étant soumise à une exigence de sécurité accrue par rapport à au moins une autre fonction parmi les fonctions,
une zone de sécurité (4) étant prévue sur la carte de circuit imprimé (3), zone de sécurité dans laquelle tous les composants destinés à exécuter la fonction de sécurité, comprenant au moins un premier microprocesseur (8), sont mis en œuvre de façon à répondre à l'exigence de sécurité, toute communication, utilisant la carte de circuit imprimé (3), du premier microprocesseur vers et depuis la zone de sécurité (4) étant effectuée de manière cryptée de bout en bout, et au moins un deuxième microprocesseur (10), qui ne satisfait pas à l'exigence de sécurité pour assurer au moins une autre fonction à l'extérieur de la zone de sécurité (4), étant disposé sur la carte de circuit imprimé (3).

2. Dispositif de commande (1) selon la revendication 1,
la fonction de sécurité étant une fonction GNSS qui fournit des données de position au véhicule automobile (16) .

3. Dispositif de commande (1) selon la revendication 2,
les composants de la zone de sécurité (4) comprenant, outre le premier microprocesseur (8), une antenne GNSS (6) et/ou un récepteur GNSS (7) et/ou au moins un composant à haute fréquence (6) et/ou une unité de mesure inertielle (9).

4. Dispositif de commande (1) selon l'une des revendications précédentes,
le premier microprocesseur (8) comportant une interface (14) destinée à fournir des données de communication cryptées de bout en bout comme composant communiquant depuis la zone de sécurité (4).

5. Dispositif de commande (1) selon l'une des revendications précédentes,
les premier et deuxième microprocesseurs (8, 10) étant reliés à un commutateur (11) situé à l'extérieur de la zone de sécurité (4) et/ou une unité d'alimentation en courant (13) commune à l'ensemble de la carte de circuit imprimé (3), y compris la zone de sécurité (4), étant prévue sur la carte de circuit imprimé (3).

6. Véhicule automobile (16), comportant au moins un dispositif de commande (1) selon l'une des revendications précédentes.

7. Véhicule automobile (16) selon la revendication 6, ledit véhicule automobile comportant au moins un dispositif informatique (19) qui fournit des données de communication à la zone de sécurité (4) et étant conçu pour envoyer les données de communication au dispositif de commande (1) sous forme cryptée de bout en bout.
